# EUROPÄISCHE PATENTSCHRIFT

(11) **EP 4 339 498 B1**
(45) Veröffentlichungstag und Bekanntmachung des Hinweises auf die Patenterteilung: **15.10.2025**
(21) Anmeldenummer: 23185732.7
(22) Anmeldetag: 17.07.2023
(51) Int. Cl.: F16L 55/18, F16L 55/165

(54) **VERFAHREN ZUM SANIEREN EINES KANALROHRS MITTELS SCHLAUCH-RELINING**
METHOD FOR RESTORING A SEWER PIPE BY MEANS OF HOSE RELINING
PROCÉDÉ DE RÉNOVATION D'UN TUYAU DE CANALISATION AU MOYEN D'UN TUBAGE FLEXIBLE

(30) Priorität: 13.09.2022 DE 102022003373
(43) Veröffentlichungstag der Anmeldung: 20.03.2024
(73) Patentinhaber: IBAK Helmut Hunger GmbH & Co. KG, 24148 Kiel (DE)
(72) Erfinder: Müller-Holldorf, Mathias, 24145 Kiel (DE); Neefe, Nikolai, 24217 Schönberg (DE); Meier, Dominik, 24576 Bad Bramstedt (DE); Wohlers, Henning, 24113 Kiel (DE)
(74) Vertreter: Lobemeier, Martin Landolf

(56) Entgegenhaltungen:
- EP-B1- 1 070 905
- WO-A1-94/29744
- DE-A1- 102021 201 107
- US-A1- 2019 210 235
- WHITELEY BOB: "Radar and SEWREEL Testing of Buried Drains and Sewers", 30 December 2003 (2003-12-30) - 22 November 2024 (2024-11-22), XP093227119, Retrieved from the Internet <URL:https://www.ndt.net/article/ndtce03/papers/v092/v092.htm> [retrieved on 20241122]
- FAKULTÄT NATURWISSENSCHAFTLICH-TECHNISCHEN ET AL: "Non-destructive testing and mechanical characterization of thermosetting polymers used in pipeline rehabilitation Dissertation zur Erlangung des Grades des Doktors der Ingenieurwissenschaften", 17 September 2018 (2018-09-17), XP093227123, Retrieved from the Internet <URL:https://publikationen.sulb.uni-saarland.de/bitstream/20.500.11880/27185/3/Final3.pdf> [retrieved on 20241122]
- MCGRAW DAVID: "THE MEASUREMENT OF THE DIELECTRIC CONSTANT OF CONCRETE PIPES AND CLAY PIPES", 31 August 2013 (2013-08-31), XP093227131, Retrieved from the Internet <URL:https://digitalcommons.latech.edu/cgi/viewcontent.cgi?article=1285&context=dissertations> [retrieved on 20241122]

## Beschreibung

Die Erfindung betrifft ein Verfahren zum Sanieren eines Kanalrohrs mittels Schlauch-Relining, wobei das Kanalrohr gegebenenfalls einen Abzweig aufweist. Darüber hinaus betrifft die Erfindung eine Vorrichtung zur Aushärtung eines Schlauchliners mit wenigstens einer Strahlungsquelle und eine Fräsmaschine mit einem für die Bearbeitung eines Schlauchliners eingerichteten Fräswerkzeug.

Zur grabenlosen Sanierung von Abflussrohren außerhalb von Gebäuden wird regelmäßig auf das Schlauch-Relining-Verfahren zurückgegriffen, mit dessen Hilfe ein Schlauchliner (auch Inliner genannt) in die sanierungsbedürftige Rohrleitung eingezogen wird, wodurch ein nahtloses "Rohr-im-Rohr"-System entsteht. Ausgehend von einem Kanalschacht, einem Fallrohr oder einem Ablauf wird ein mit Kunstharz getränkter Textilschlauch in eine defektes Entwässerungsrohr eingebracht, der unter konstantem Luft- oder Wasserdruck an die beschädigte Rohrwand angelegt wird und dort langsam aushärtet. Die für das Aushärtenlassen des in das sanierungsbedürftige Rohr eingezogenen harzgetränkten Schlauchliners erforderliche Zeit kann durch Zugabe von Wärme, Warmwasser, Dampf oder durch Einwirken von durch den Schlauchliner geführten UV-Lichtquellen auf den Schlauchliner deutlich reduziert werden. Insbesondere kommen zur Aushärtung von Schlauchlinern in der Praxis UV-Lampen mit einer Wellenlänge von 360 bis 420 nm und mit 400 bis 1200 Watt Leistung in Lichterzügen mit bis zu 14 Lampen zum Einsatz.

Dieses an sich bekannte Verfahren kann bei Rohren zwischen DN 50 und DN 2000 und Einbaulängen von bis zu 200 m an einem Stück angewendet werden. Die bestehenden Hausanschlüsse und Zuläufe, die durch Schlauchliner zunächst verschlossen werden, werden mittels schiebe- oder fahrbarem Fräsroboter punktgenau wieder aufgefräst, sodass der Kanal nach Beendigung der Sanierungsarbeiten unmittelbar wieder benutzt werden kann.

Nachteilig an dem an sich vorteilhaften Verfahren ist, dass insbesondere die photochemisch induzierte Härtung sehr energieaufwändig ist und die für eine vollständige oder zumindest für die weitere Bearbeitung des Schlauchliners mittels Fräsen hinreichende Aushärtung des Schlauchliners benötigte Zeit in dem nicht ohne weiteres zugänglichen Schlauchlinerabschnitt nur anhand von Erfahrungswerten geschätzt werden kann, wobei die örtlichen Gegebenheiten im sanierungsbedürftigen Rohr vollkommen außer Betracht bleiben. Um nun aber ein ausgehärtetes, bearbeitungsfähiges Rohr zu erhalten, ist dieses Verfahren aufgrund eines willkürlich gesetzten Zeitrahmens, in dem die Aushärtung sicher erfolgen kann, sehr zeit-, arbeits- und energieaufwändig, wobei der gesetzte Zeitrahmen auch von den Materialeigenschaften des verwendeten Schlauchliners abhängig sein kann.

In dieser Hinsicht ist aus der DE 10 2021 201 107 A1 ein Verfahren zum Anpassen von Betriebsparametern der zum Aushärten des Schlauchliners verwendeten Bestrahlungsmittel in Abhängigkeit von den kapazitiv erfassten dielektrischen Eigenschaften des Schlauchliners bekannt. Nachteilig an dieser Vorgehensweise ist jedoch, dass zur Messung der dielektrischen Eigenschaften des Schlauchliners ein geringer Messabstand erforderlich ist, der nicht nur zu einer potentiellen Abschattung des Schlauchliners im Bereich der Messung führt, sondern selbst bei geringen Abstandsschwankungen fehlerbehaftete Ergebnisse liefert.

Die US 2019/210235 A1 und die EP 1 070 905 B1 zeigen ein Verfahren zum Sanieren eines Abzweigs sowie eine Fräsmaschine.

Aufgabe der Erfindung ist es daher, ein Verfahren zur Sanierung eines Rohrs mittels eines Schlauchliners zu schaffen mit dessen Hilfe der Zeit-, Arbeits- und Energieaufwand weiter reduziert werden kann.

Diese Aufgabe wird erfindungsgemäß durch das Verfahren mit den Merkmalen von Anspruch 1, das Verfahren mit den Merkmalen von Anspruch 7, die Fräsmaschine mit den Merkmalen von Anspruch 9 und die Vorrichtung zur Aushärtung eines Schlauchliners mit wenigstens einer Strahlungsquelle gemäß Anspruch 11 gelöst. Die Unteransprüche geben jeweils vorteilhafte Ausgestaltungen der Erfindung wieder.

Grundgedanke der Erfindung ist es, die sich während des Aushärtungsvorgangs von Schlauchlinern ändernde Dielektrizitätskonstante des Schlauchliners für die Bestimmung des Härtegrads des Schlauchliners zu nutzen. Die für das Ausbreitungsverhalten und die Reflektion von Radarsignalen maßgebliche Permittivität des Mediums "Schlauchliner" wird nach einem Aspekt der Erfindung also insbesondere dazu genutzt, die für das Aushärten des Schlauchliners erforderlich Zeit auf ein Minimum zu begrenzen oder die Bearbeitung eines Schlauchliners zum Öffnen wenigstens eines vom Schlauchliner verschlossenen Abzweigs erst dann vorzunehmen, wenn der Schlauchliner tatsächlich ausgehärtet ist.

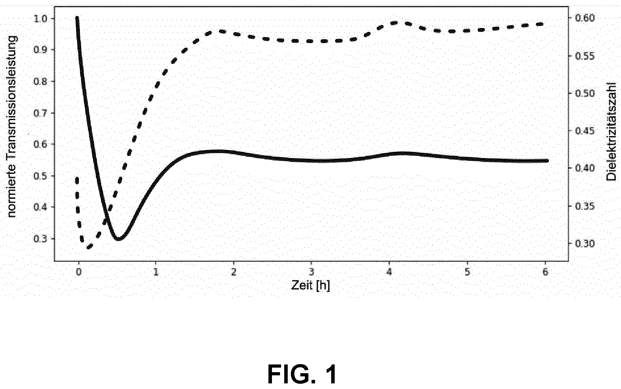

Fig. 1 zeigt zeitaufgelöste Radarsignalinformationen in Form der normierten Transmissionsleistung (gestrichelte Linie) und der dielektrischen Konstante (geschlossene Linie) während des Aushärtevorgangs eines Schlauchliners. Es ist zu erkennen, dass sich die dielektrische Konstante des Schlauchlinermaterials nach dem Aushärten des Schlauchliners nicht (mehr) ändert, sodass entweder eine vorbestimmte Dielektrizitätskonstante oder eine gegen Null tendierende Änderung der Dielektrizitätskonstante das Ende des Härteprozesses bzw. das Vorliegen eines vollständig oder zumindest für die Nutzung oder weitere Bearbeitung des Schlauchliners ausreichend ausgehärteten Schlauchliner anzeigt.

So kann die Erfindung dazu genutzt werden, dass während wenigstens eine UV-LED Lichtkette oder wenigstens eine Hg-Dampflampe durch den auszuhärtenden Schlauchliner gezogen wird, zugleich das Schlauchlinermaterial kontinuierlich vermessen wird. Dabei wird aufzubringende Wirkzeit an jeder einzelnen Position anhand der Messdaten der Radareinheit in-situ ermittelt. Sollte sich herausstellen, dass die Reaktionsrate in dem Schlauchlinermaterial langsamer als das typische Mittel ist, kann gegebenenfalls mit einer Leistungssteigerung nachgeregelt werden - ansonsten dauert die Aushärtung einfach nur etwas länger. Jedenfalls wird nur so viel Arbeitszeit und Energie in die lokale Aushärtung investiert, bis die Reaktionsrate Null bzw. asymptotisch Null ist. (Äquivalent bzw. allgemein die Signaländerung). Abschließend kann die relative Aushärtung erfasst werden.

Alternativ kann die Schlauchlineraushärtung auch im Nachgang inspiziert werden, um die relative Aushärtung zu ermitteln. (Relative Aushärtung 0 - 100%). Diese Information ist insbesondere für Ingenieurbüros wichtig, um die Tauglichkeit der Rohre für die Verwendung, aber auch für die Bearbeitung durch Fräswerkzeuge freigeben zu können.

Mithilfe der Erfindung kann also die Reaktionsrate des Aushärtevorgangs ermittelt werden, um Rückschlüsse auf einen ordentlich verlaufenden Aushärtprozess zu ziehen oder Reaktionshemmungen, beispielsweise aufgrund einer Hinterspülung des Schlauchliners mit Wasser, zu ermitteln. Durch Ermittlung der Reaktionsrate ist es zugleich möglich, die lokale Arbeitszeit anzugeben oder das Prozessende anzuzeigen, insbesondere wenn sich zeitaufgelöste Messwerte asymptotisch einem vorbestimmten Wert nähern, der den Abschluss der Aushärtung anzeigt. Durch Vergleich mit unter kontrollierten Bedingungen zu 100% durchgehärteten Schlauchlinermaterialien kann ein relativer Aushärtegrad bestimmt werden, der in einer Datenbank hinterlegt werden kann und das Verfahren zur Aushärtung also auf ein bestimmtes Material (eines bestimmten Herstellers) abgestimmt werden kann.

Schließlich kann auch mit einer erfindungsgemäß ausgestatteten Fräsmaschine kontrolliert werden, ob das Schlauchlinermaterial an der Arbeitsstelle zum Öffnen eines Abzweigs ausreichend ausgehärtet ist.

Erfindungsgemäß wird also ein Verfahren zum Sanieren eines Kanalrohrs mittels Schlauch-Relining vorgeschlagen, das die folgenden Schritte aufweist:
- Einbringen eines harzgetränkten Schlauchliners in ein Kanalrohr,
- Aushärten wenigstens eines Abschnitts des harzgetränkten Schlauchliners in dem Kanalrohr durch Beaufschlagen mit Wärme und/oder Licht,
- Ermitteln der Dielektrizitätskonstante des Schlauchliners wenigstens in dem mit Wärme und/oder Licht beaufschlagten Abschnitt oder Ermitteln der Änderung der Dielektrizitätskonstante wenigstens in dem mit Wärme und/oder Licht beaufschlagten Abschnitt während des Beaufschlagens mit Wärme und/oder Licht und
- Beenden des Beaufschlagens des wenigstens einen Abschnitts des Schlauchliners mit Wärme und/oder Licht bei Ermitteln einer vorbestimmten, einen ausgehärteten Schlauchliner anzeigenden Dielektrizitätskonstante oder einer vorbestimmten, einen ausgehärteten Schlauchliner anzeigenden Änderung der Dielektrizitätskonstante,
wobei das Ermitteln der Dielektrizitätskonstante oder das Ermitteln der Änderung der Dielektrizitätskonstante mittels Radar erfolgt.

Die Dielektrizitätskonstante kann entweder kontinuierlich während der Wärme- und/oder Lichtbehandlung des Schlauchliners erfolgen oder im Anschluss an eine zeitlich begrenzte Wärme- und/oder Lichtbehandlung des Schlauchliners. Dabei kann der Schlauchliner, insbesondere bei insgesamt geringer Schlauchlinerlänge, insgesamt mit Wärme- und/oder Licht beaufschlagt werden oder nur ein Abschnitt des Schlauchliners.

Das Beaufschlagen des Schlauchliners bzw. des wenigstens einen Abschnitts des Schlauchliners erfolgt bevorzugt mittels einer eine UV-Lampe, beispielsweise eine UV-LED oder eine Hg-Dampflampe, und/oder einen Infrarotstrahler aufweisenden Strahlungsquelle. Das Beenden der Licht- und/oder Wärmebehandlung des Schlauchliners bzw. Schlauchlinerabschnitts, also das Beenden des Beaufschlagens des Schlauchliners bzw. des wenigstens einen Abschnitts des Schlauchliners erfolgt entweder durch Abschalten der Strahlungsquelle oder dadurch, dass die Strahlungsquelle in einen weiteren nicht mit Wärme und/oder Licht behandelten Abschnitt des Schlauchliners oder nach außerhalb des Schlauchliners bewegt wird.

Wird der Schlauchliner abschnittsweise ausgehärtet ist vorteilhaft vorgesehen, dass die Geschwindigkeit der durch den Schlauchliner bewegten Strahlungsquelle von der Änderung der Dielektrizitätskonstante in dem jeweils mit Wärme und/oder Licht beaufschlagten Abschnitt abhängig ist. Bei dieser Ausgestaltung wird die Verweildauer bei ansonsten konstanter Leistung der Strahlungsquelle an den jeweiligen Aushärtungsvorgang angepasst. Im Bereich schnellhärtender Abschnitte des Schlauchliners wird die Geschwindigkeit der Strahlungsquelle hoch bzw. die Verweildauer gering und im Bereich langsamhärtender Abschnitte des Schlauchliners wird die die Geschwindigkeit der Strahlungsquelle gering bzw. die Verweildauer hoch gewählt.

Alternativ kann die Leistung der Strahlungsquelle von der Änderung der Dielektrizitätskonstante in dem mit Wärme und/oder Licht beaufschlagten Abschnitt abhängig sein, sodass eine Leistungsregelung der Strahlungsquelle in Abhängigkeit des Aushärtevorgangs in dem jeweiligen Abschnitt erfolgt. Schnellhärtende Bereiche des Schlauchliners können mit geringer Leistung und langsamhärtende Bereiche des Schlauchliners mit höherer Leistung beaufschlagt werden.

Entsprechend ist zur Ausführung des Verfahrens eine Vorrichtung zur Aushärtung eines Schlauchliners mit wenigstens einer Strahlungsquelle vorgesehen, die ein zur Ermittlung der Dielektrizitätskonstante des Schlauchliners als Maß der Aushärtung des Schlauchliners eingerichtetes Radargerät aufweist. Das Radargerät kann als embedded Platinenlösung ausgebildet sein, die insbesondere einen Radar Transceiver Sensor aufweist, mit einer Frequenz von beispielsweise 120 GHz oder 300 GHz. Dabei kommt als Auswerteeinheit ein Microcontroller oder ein digitaler Signalprozessor (DSP) oder eine zentrale Verarbeitungseinheit (CPU) zur Anwendung. Als Steuer- und Datenschnittstelle ist insbesondere ein serieller BUS vorgesehen.

Um eine definierte Abstrahlcharakteristik zu erhalten, ist das Radargerät wellenlängenspezifisch konstruktiv besonders bevorzugt in einem in der Vorrichtung besonders bevorzugt vorgesehenen Kamerakopf eingebaut, die speziell drehbar eingerichtet ist. Höchst bevorzugt können die Radarinformation mit der Lageinformation (Drehwinkel, Schwenkwinkel, Streckenposition) für die Erstellung von 3D-Modellen miteinander verknüpft sein.

Die Strahlungsquelle ist bevorzugt eine UV-Lampe und/oder ein Infrarotstrahler.

Soll der Schlauchliner im Anschluss an dessen Aushärtung bearbeitet werden, ist erfindungsgemäß auch ein Verfahren zum Sanieren eines wenigstens einen Abzweig aufweisenden Kanalrohrs mittels Schlauch-Relining vorgesehen, das die folgenden Schritte aufweist: Einbringen eines harzgetränkten Schlauchliners in ein Kanalrohr, Aushärten des harzgetränkten Schlauchliners in dem Kanalrohr, Bearbeiten des ausgehärteten Schlauchliners zum Öffnen des wenigstens einen vom Schlauchliner verschlossenen Abzweigs und Ermitteln der Dielektrizitätskonstante des Schlauchliners oder Ermitteln der Änderung der Dielektrizitätskonstante des Schlauchliners während dessen Aushärtens, wobei das Bearbeiten des Schlauchliners erst nach Ermitteln einer vorbestimmten, einen ausgehärteten Schlauchliner anzeigenden Dielektrizitätskonstante oder einer vorbestimmten, einen ausgehärteten Schlauchliner anzeigenden Änderung der Dielektrizitätskonstante erfolgt.

Für das nebengeordnet beanspruchte Verfahren zum Sanieren eines wenigstens einen Abzweig aufweisenden Kanalrohrs mittels Schlauch-Relining ist bevorzugt vorgesehen, dass das Ermitteln der Dielektrizitätskonstante oder das Ermitteln der Änderung der Dielektrizitätskonstante mittels Radar erfolgt.

Allgemein ist die vorbestimmte, einen ausgehärteten Schlauchliner anzeigende Dielektrizitätskonstante oder die vorbestimmte, einen ausgehärteten Schlauchliner anzeigende Änderung der Dielektrizitätskonstante in jedem Fall von den Eigenschaften des verwendeten Schlauchliners abhängig. Vorteilhaft ist also eine Datenbank für verschiedene Schlauchlinertypen, insbesondere von verschiedenen Herstellern vorgesehen, sodass der Anwender eine Voreinstellung im Hinblick auf den verwendeten Schlauchliner vornehmen kann, aufgrund der diejenige Dielektrizitätskonstante als vorbestimmte Dielektrizitätskonstante ausgewählt wird, die einen ausgehärteten Schlauchliner des gewählten Schlauchlinertyps anzeigt.

Für den Fall, dass die Aushärtung des Schlauchliners ohne Überprüfung der Dielektrizitätskonstante erfolgt, ist erfindungsgemäß auch eine Fräsmaschine mit einem für die Bearbeitung eines Schlauchliners eingerichteten Fräswerkzeug vorgesehen, das ein zur Ermittlung der Dielektrizitätskonstante des Schlauchliners im Bereich des Fräswerkzeugs als Maß der Aushärtung des Schlauchliners eingerichtetes Radargerät aufweist.

Speziell ist vorgesehen, dass die Fräsmaschine eine mit dem Radargerät verbundene, bei Vorliegen einer vorbestimmten Dielektrizitätskonstante die Bearbeitung des Schlauchliners mit dem Fräswerkzeug freigebende Logik aufweist. Aufgrund dieser Ausgestaltung ist gewährleistet, dass das Fräswerkzeug erst dann in Betrieb und die Fräsmaschine bestimmungsgemäß verwendet werden kann, wenn der Schlauchliner ausreichend ausgehärtet ist.

Der Vorteil der vorliegenden Erfindung liegt in einer direkten Nachverfolgbarkeit des Aushärtprozesses im Schlauchlinermaterial. Die Erfindung ermöglicht eine quantitative Analyse der Prozessqualität anhand der Reaktionsrate und insbesondere Identifizierung des Prozessendes der Aushärtung des Schlauchliners. Die Bewertung des Grades der Aushärtung erfolgt insbesondere anhand direkter Vermessung der Dielektrizitätskonstante (des Brechungsindex) des Schlauchlinermaterials und dem Vergleich mit einer Referenz. Der Arbeitsaufwand bei der Sanierung beschränkt sich somit nur noch auf den Zeitraum bis Prozessende, nicht aber darüber hinaus, sodass Zeit-, Arbeits- und Energieaufwand minimiert werden können.

Insgesamt erfolgt vorteilhaft eine Closed Loop Regelung mit einer automatisierten Prozessführung/-steuerung basierend auf direkten Messwerten (Zeitkonstante, relative Aushärtung).

Schließlich kann die verbleibende Arbeitsdauer gegenüber dem Anwender kommuniziert werden und ein Mapping der relativen Aushärtung auf Lineroberfläche und Linerlänge erfolgen, wobei ein entsprechend abspeicherbarer Datensatz in einer Datenbank nachhaltig einsehbar und die komplette Sanierung protokollierbar ist.

## Patentansprüche

1. Verfahren zum Sanieren eines Kanalrohrs mittels Schlauch-Relining mit den Schritten:
- Einbringen eines harzgetränkten Schlauchliners in ein Kanalrohr,
- Aushärten wenigstens eines Abschnitts des harzgetränkten Schlauchliners in dem Kanalrohr durch Beaufschlagen mit Wärme und/oder Licht,
- Ermitteln der Dielektrizitätskonstante des Schlauchliners wenigstens in dem mit Wärme und/oder Licht beaufschlagten Abschnitt oder Ermitteln der Änderung der Dielektrizitätskonstante wenigstens in dem mit Wärme und/oder Licht beaufschlagten Abschnitt während des Beaufschlagens mit Wärme und/oder Licht und
- Beenden des Beaufschlagens des wenigstens einen Abschnitts des Schlauchliners mit Wärme und/oder Licht bei Ermitteln einer vorbestimmten, einen ausgehärteten Schlauchliner anzeigenden Dielektrizitätskonstante oder einer vorbestimmten, einen ausgehärteten Schlauchliner anzeigenden Änderung der Dielektrizitätskonstante,
wobei das Ermitteln der Dielektrizitätskonstante oder das Ermitteln der Änderung der Dielektrizitätskonstante mittels Radar erfolgt.

2. Verfahren nach Anspruch 1, **dadurch gekennzeichnet, dass** das Beaufschlagen des wenigstens einen Abschnitts des Schlauchliners mittels einer eine UV-Lampe und/oder einen Infrarotstrahler aufweisenden Strahlungsquelle erfolgt.

3. Verfahren nach Anspruch 2, **dadurch gekennzeichnet, dass** das Beenden des Beaufschlagens des wenigstens einen Abschnitts des Schlauchliners durch Abschalten der Strahlungsquelle erfolgt.

4. Verfahren nach Anspruch 2, **dadurch gekennzeichnet, dass** das Beenden des Beaufschlagens des wenigstens einen Abschnitts des Schlauchliners durch Bewegen der Strahlungsquelle in einen weiteren nicht mit Wärme und/oder Licht behandelten Abschnitt des Schlauchliners erfolgt.

5. Verfahren nach Anspruch 4, **dadurch gekennzeichnet, dass** die Geschwindigkeit der durch den Schlauchliner bewegten Strahlungsquelle von der Änderung der Dielektrizitätskonstante in dem jeweils mit Wärme und/oder Licht beaufschlagten Abschnitt abhängig ist.

6. Verfahren nach einem der Ansprüche 2 bis 5, **dadurch gekennzeichnet, dass** die Leistung der Strahlungsquelle von der Änderung der Dielektrizitätskonstante in dem mit Wärme und/oder Licht beaufschlagten Abschnitt abhängig ist.

7. Verfahren zum Sanieren eines wenigstens einen Abzweig aufweisenden Kanalrohrs mittels Schlauch-Relining mit den Schritten:
- Einbringen eines harzgetränkten Schlauchliners in ein Kanalrohr,
- Aushärten des harzgetränkten Schlauchliners in dem Kanalrohr, und
- Bearbeiten des ausgehärteten Schlauchliners zum Öffnen des wenigstens einen vom Schlauchliner verschlossenen Abzweigs,
**gekennzeichnet durch**
Ermitteln der Dielektrizitätskonstante des Schlauchliners mittels Radar oder Ermitteln der Änderung der Dielektrizitätskonstante des Schlauchliners während dessen Aushärtens mittels Radar, wobei das Bearbeiten des Schlauchliners erst nach Ermitteln einer vorbestimmten, einen ausgehärteten Schlauchliner anzeigenden Dielektrizitätskonstante oder einer vorbestimmten, einen ausgehärteten Schlauchliner anzeigenden Änderung der Dielektrizitätskonstante erfolgt.

8. Verfahren nach einem der vorhergehenden Ansprüche, **dadurch gekennzeichnet, dass** die vorbestimmte, einen ausgehärteten Schlauchliner anzeigende Dielektrizitätskonstante oder die vorbestimmte, einen ausgehärteten Schlauchliner anzeigende Änderung der Dielektrizitätskonstante von den Eigenschaften des verwendeten Schlauchliners abhängig ist.

9. Fräsmaschine mit einem für die Bearbeitung eines Schlauchliners eingerichteten Fräswerkzeug, **gekennzeichnet durch** ein zur Ermittlung der Dielektrizitätskonstante des Schlauchliners im Bereich des Fräswerkzeugs als Maß der Aushärtung des Schlauchliners eingerichtetes Radargerät.

10. Fräsmaschine nach Anspruch 9, **gekennzeichnet durch** eine mit dem Radargerät verbundene, bei Vorliegen einer vorbestimmten Dielektrizitätskonstante die Bearbeitung des Schlauchliners mit dem Fräswerkzeug freigebenden Logik.

11. Vorrichtung zur Aushärtung eines Schlauchliners mit wenigstens einer Strahlungsquelle, **gekennzeichnet durch** ein zur Ermittlung der Dielektrizitätskonstante des Schlauchliners als Maß der Aushärtung des Schlauchliners eingerichtetes Radargerät.

12. Vorrichtung nach Anspruch 11, **dadurch gekennzeichnet, dass** die Strahlungsquelle eine UV-Lampe und/oder ein Infrarotstrahler ist.

## Claims

1. Method for rehabilitating a sewer pipe by means of pipe relining with the steps:
- Inserting a resin-impregnated pipe liner into a sewer pipe,
- Curing at least one section of the resin-impregnated pipe liner in the sewer pipe by applying heat and/or light,
- Determining the dielectric constant of the pipe liner at least in the section exposed to heat and/or light, or determining the change in the dielectric constant at least in the section exposed to heat and/or light during exposure to heat and/or light, and
- Terminating the application of heat and/or light to the at least one portion of the pipe liner upon determination of a predetermined dielectric constant indicative of a cured pipe liner or a predetermined change in the dielectric constant indicative of a cured pipe liner,
wherein the determination of the dielectric constant or the determination of the change in the dielectric constant is carried out by means of radar.

2. Method according to claim 1, **characterized in that** the at least one section of the pipe liner is exposed to a radiation source comprising a UV lamp and/or an infrared radiator.

3. Method according to claim 2, **characterized in that** the exposure of the at least one section of the pipe liner is terminated by switching off the radiation source.

4. Method according to claim 2, **characterized in that** the exposure of the at least one section of the pipe liner is terminated by moving the radiation source into a further section of the pipe liner which has not been treated with heat and/or light.

5. Method according to claim 4, **characterized in that** the speed of the radiation source moving through the pipe liner is dependent on the change in the dielectric constant in the section to which heat and/or light is applied in each case.

6. Method according to one of claims 2 to 5, **characterized in that** the power of the radiation source is dependent on the change in the dielectric constant in the section exposed to heat and/or light.

7. method of rehabilitating a sewer pipe having at least one branch by means of pipe relining, comprising the steps of:
- Inserting a resin-impregnated pipe liner into a sewer pipe,
- Curing of the resin-impregnated pipe liner in the sewer pipe, and
- Processing the hardened pipe liner to open at least one branch that is sealed by the pipe liner,
**characterized by**
Determining the dielectric constant of the pipe liner by means of radar or determining the change in the dielectric constant of the pipe liner during its curing by means of radar, wherein the processing of the pipe liner takes place only after determination of a predetermined dielectric constant indicating a cured pipe liner or a predetermined change in the dielectric constant indicating a cured pipe liner.

8. Method according to one of the preceding claims, **characterized in that** the predetermined dielectric constant indicating a cured pipe liner or the predetermined change in the dielectric constant indicating a cured pipe liner is dependent on the properties of the pipe liner used.

9. Milling machine with a milling tool set up for machining a pipe liner, **characterized by** a radar device set up to determine the dielectric constant of the pipe liner in the region of the milling tool as a measure of the curing of the pipe liner.

10. Milling machine according to claim 9, **characterized by** a logic connected to the radar unit which, when a predetermined dielectric constant is present, releases the machining of the pipe liner with the milling tool.

11. Device for curing a pipe liner with at least one radiation source, **characterized by** a radar device set up to determine the dielectric constant of the pipe liner as a measure of the curing of the pipe liner

12. Device according to claim 11, **characterized in that** the radiation source is a UV lamp and/or an infrared radiator.

## Revendications

1. Procédé permettant la rénovation d'un tuyau d'égout à l'aide d'un gainage de tuyau, comportant les étapes consistant à:
- mettre en place une gaine de tuyau imprégnée de résine dans un tuyau d'égout,
- durcir au moins une section de la gaine de tuyau imprégnée de résine dans le tuyau d'égout par exposition à la chaleur et/ou à la lumière,
- déterminer la constante diélectrique de la gaine de tuyau au moins dans la section exposée à la chaleur et/ou à la lumière ou détermination de la variation de la constante diélectrique au moins dans la section exposée à la chaleur et/ou à la lumière pendant l'exposition à la chaleur et/ou à la lumière et
- arrêter l'exposition de l'au moins une section de la gaine de tuyau à la chaleur et/ou à la lumière lors de la détermination d'une constante diélectrique prédéterminée indiquant une gaine de tuyau durcie ou d'une variation prédéterminée de la constante diélectrique indiquant une gaine de tuyau durcie,
dans lequel la détermination de la constante diélectrique ou la détermination de la variation de la constante diélectrique s'effectue à l'aide d'un radar.

2. Procédé selon la revendication 1, **caractérisé en ce que** l'exposition de l'au moins une section de la gaine de tuyau s'effectue à l'aide d'une source de rayonnement présentant une lampe UV et/ou un émetteur infrarouge.

3. Procédé selon la revendication 2, **caractérisé en ce que** l'arrêt de l'exposition de l'au moins une section de la gaine de tuyau s'effectue par coupure de la source de rayonnement.

4. Procédé selon la revendication 2, **caractérisé en ce que** l'arrêt de l'exposition de l'au moins une section de la gaine de tuyau s'effectue par déplacement de la source de rayonnement dans une autre section de la gaine de tuyau non traitée par la chaleur et/ou la lumière.

5. Procédé selon la revendication 4, **caractérisé en ce que** la vitesse de la source de rayonnement déplacée à travers la gaine de tuyau dépend de la variation de la constante diélectrique dans la section respective exposée à la chaleur et/ou à la lumière.

6. Procédé selon l'une des revendications 2 à 5, **caractérisé en ce que** la puissance de la source de rayonnement dépend de la variation de la constante diélectrique dans la section exposée à la chaleur et/ou à la lumière.

7. Procédé permettant la rénovation d'un tuyau d'égout présentant au moins une dérivation à l'aide d'un gainage de tuyau, comportant les étapes consistant à :
- mettre en place une gaine de tuyau imprégnée de résine dans un tuyau d'égout,
- durcir la gaine de tuyau imprégnée de résine dans le tuyau d'égout, et
- traiter la gaine de tuyau durcie pour l'ouverture de l'au moins une dérivation fermée par la gaine de tuyau,
**caractérisé par**
la détermination de la constante diélectrique de la gaine de tuyau à l'aide d'un radar ou détermination de la variation de la constante diélectrique de la gaine de tuyau pendant son durcissement à l'aide d'un radar, dans lequel le traitement de la gaine de tuyau ne s'effectue qu'après la détermination d'une constante diélectrique prédéterminée indiquant une gaine de tuyau durcie ou d'une variation prédéterminée de la constante diélectrique indiquant une gaine de tuyau durcie.

8. Procédé selon l'une des revendications précédentes, **caractérisé en ce que** la constante diélectrique prédéterminée indiquant une gaine de tuyau durcie ou la variation prédéterminée de la constante diélectrique indiquant une gaine de tuyau durcie dépend des propriétés de la gaine de tuyau utilisée.

9. Fraiseuse comportant un outil de fraisage conçu pour le traitement d'une gaine de tuyau, **caractérisée par** un appareil radar conçu pour la détermination de la constante diélectrique de la gaine de tuyau dans la zone de l'outil de fraisage comme mesure du durcissement de la gaine de tuyau.

10. Fraiseuse selon la revendication 9, **caractérisée par** une logique reliée à l'appareil radar, libérant le traitement de la gaine de tuyau avec l'outil de fraisage en présence d'une constante diélectrique prédéterminée.

11. Dispositif permettant le durcissement d'une gaine de tuyau comportant au moins une source de rayonnement, **caractérisé par** un appareil radar conçu pour la détermination de la constante diélectrique de la gaine de tuyau comme mesure du durcissement de la gaine de tuyau.

12. Dispositif selon la revendication 11, **caractérisé en ce que** la source de rayonnement est une lampe UV et/ou un émetteur infrarouge.
